# EUROPEAN PATENT SPECIFICATION

(11) **EP 3 714 289 B1**
(45) Date of publication and mention of the grant of the patent: **20.04.2022**
(21) Application number: 18916625.9
(22) Date of filing: 28.04.2018
(51) Int. Cl.: G01S 17/00

(54) **LIGHT DETECTION AND RANGING SENSORS WITH OPTICS AND SOLID-STATE DETECTORS, AND ASSOCIATED SYSTEMS AND METHODS**
LICHTDETEKTIONS- UND ENTFERNUNGSSENSOREN MIT OPTIK UND FESTKÖRPERDETEKTOREN UND ZUGEHÖRIGE SYSTEME UND VERFAHREN
CAPTEURS DE DÉTECTION ET DE TÉLÉMÉTRIE DE LUMIÈRE AVEC DÉTECTEURS OPTIQUES ET À SEMI-CONDUCTEURS, ET SYSTÈMES ET PROCÉDÉS ASSOCIÉS

(43) Date of publication of application: 30.09.2020
(73) Proprietor: SZ DJI Technology Co., Ltd., Shenzhen, Guangdong 518057 (CN)
(72) Inventor: ZHENG, Guoguang, Shenzhen Guangdong 518057 (CN); WANG, Mingyu, Shenzhen Guangdong 518057 (CN); HONG, Xiaoping, Shenzhen Guangdong 518057 (CN); LIU, Xiang, Shenzhen Guangdong 518057 (CN); HUANG, Huai, Shenzhen Guangdong 518057 (CN)
(74) Representative: Goddar, Heinz J.
(86) International application number: PCT/CN2018/085164
(87) International publication number: WO 2019/205164

(56) References cited:
- EP-A1- 2 957 926
- WO-A1-2012/123809
- WO-A1-2016/160961
- WO-A1-2018/054512
- WO-A1-2019/069260
- CN-A- 103 364 790
- CN-A- 103 969 637
- CN-A- 106 405 572
- CN-A- 107 300 705
- CN-A- 107 300 705
- CN-A- 107 340 523
- US-A1- 2016 327 646
- US-B1- 8 432 536

## Description

### TECHNICAL FIELD

The present invention is directed generally to autonomous sensing, and more specifically, to components, systems and techniques associated with light detection and ranging (LIDAR) applications.

### BACKGROUND

With their ever-increasing performance and lowering cost, intelligent machinery is now extensively used in many fields. Representative missions include crop surveillance, real estate photography, inspection of buildings and other structures, fire and safety missions, border patrols, and product delivery, among others. For obstacle detection as well as for other functionalities, it is beneficial for intelligent machinery to be equipped with obstacle detection and surrounding environment scanning devices. Light detection and ranging (LIDAR, also known as "light radar") offers reliable and accurate detection. However, to obtain an accurate model of the external environment, the LIDAR system requires a high density of data signals from the environment. Such a requirement can increase the complexity and cost of manufacturing the optical and electrical components of the LIDAR system. Accordingly, there remains a need for improved techniques for implementing LIDAR systems carried by intelligent machinery and other objects.

WO 2012/123809 A1 discloses a system for receiving a light beam, comprising an array of light sensors. The system also comprises a pixelated light switch array, in which each switch is adapted to receive at least one portion of the light beam and direct it to the array of light sensors, and the pixelated light switch array comprises a higher number of switches than the number of light sensors comprised in the array of light sensors.

US 8,432,536 B1 discloses a system for determining distance between a first platform and a second platform. In one embodiment, the first platform includes a plurality of receivers which are positioned at different distances from the second platform. Each receiver receives a signal from the second platform. Each receiver includes multiple time slots for placing the received signal in a time slot that corresponds to an arrival interval of the received signal. The system also includes a processor for determining the distance between the first and second platforms based on examining the arrival interval of the received signal in each of the receivers.

EP 2 957 926 A1 discloses a system and method for scanning a surface and a computer program implementing the method. The system comprises: - means for illuminating different sub-areas of a surface with a light beam in an alternating manner, and - means for receiving and detecting the portions of reflected light reflected on same, including: - one or more light detectors; and - light redirection means including a determined spatial distribution model of the light redirection elements, which receive the portions of reflected light and sequentially redirect them towards the light detector or detectors. The method is suitable for performing the functions carried out by the system of the disclosure. The computer program implements the method of the disclosure.

US 2016/327646 A1 discloses: A method of performing ranging and detection with an array lidar system and the array lidar system include a first illuminator to transmit a first pseudorandom binary sequence of pulses, the first pseudorandom sequence of pulses resulting in first reflections, and a second illuminator to transmit a second pseudorandom sequence of pulses, the second pseudorandom sequence of pulses being transmitted at least partly concurrently with transmission of the first pseudorandom sequence of pulses, the second pseudorandom sequence of pulses resulting in second reflections. A receiver receives the first reflections and the second reflections and associates the first reflections with the first illuminator based on a result of correlating the first reflections with the first pseudorandom sequence of pulses and a result of correlating the first reflections with the second pseudorandom sequence of pulses, the receiver includes an optical detector array and a processor.

### SUMMARY

The present invention is directed to components, systems and techniques associated with light detection and ranging (LIDAR) systems.

The invention is defined by independent claim 1, defining a sensor device, and independent claim 11, defining a method for sensing one or more objects in an external environment.

In some embodiments, the electromagnetic energy emitter module comprises a holographic filter to diffract the electromagnetic energy beam in different directions. In some embodiments, the electromagnetic energy emitter module is positioned to generate multiple electromagnetic energy beams. The electromagnetic energy emitter module can include an array of diodes, an individual diode positioned to generate an electromagnetic energy beam. For example, the electromagnetic energy emitter module includes a Vertical Cavity Surface Emitting Laser (VCSEL) array or an edge-emitting diode array. In some implementations, electromagnetic energy emitter module comprises a collimator configured to collimate the electromagnetic energy beam.

In accordance with the invention, the beam steering module comprises an optical element that includes a first surface and a second, non-parallel surface, the first surface and the second surface forming an optical element angle. The optical element is positioned to rotate at an angular speed about an axis to direct the portion of the electromagnetic energy beam to the array of semiconductor units, with individual semiconductor units positioned to detect, along a closed path corresponding to the optical element angle, multiple optical signals from the portion of the electromagnetic energy beam. In some embodiments, the optical element includes a prism. In some implementations, the optical element angle is in a range from 0° to 50°. The angular speed can be slower than or equal to 12000 rpm.

In some embodiments, the beam steering module comprises a second optical element that includes a third surface and a fourth, non-parallel surface, the third surface and the fourth surface forming a second optical element angle. The second optical element is positioned to rotate at a second angular speed about the axis, and the first and second optical elements together direct the portion of the electromagnetic energy beam to the array of semiconductor units.

In some embodiments, e beam steering module comprises a scanning mirror supported by multiple elastic parts. The multiple elastic parts enable the scanning mirror to oscillate about one or more axes to direct the portion of the electromagnetic energy beam to the array of semiconductor units. In some embodiments, the scanning mirror has an oscillation range of 0 to 50 degrees with respect to the one or more axes.

In some embodiments, the beam steering module comprises a voltage source, and a phase control device that includes multiple units, wherein the individual units are connected to the voltage source to exhibit different refractive properties under different voltages to direct the portion of the electromagnetic energy beam to the array of semiconductor units.

In some embodiments, the individual receiver units include photodiodes. In some implementations, the array of receiver units is coupled to a substrate via a plurality of bonding units, with individual bonding units being positioned between a corresponding receiver unit and the substrate, and being separate from adjacent bonding units. In some implementations, the array of receiver units is coupled to a substrate via a bonding layer positioned between the array of receiver units and the substrate. In some embodiments, first field of view is larger than the second field of view.

The disclosed techniques can be used to implement a sensor device. The sensor device includes one or more laser diodes positioned to emit one or more laser beams, a collimator positioned to collimate the one or more laser beams toward one or more objects within a first field of view, a prism that includes two non-parallel surfaces forming a prism angle, the prism positioned to receive at least a portion of the one or more laser beams that is reflected back from the one or more objects within a second field of view, and an array of photodiodes configured to convert the portion of the one or more laser beams into multiple electrical signals. The prism is further positioned to rotate at an angular speed to direct the portion of the one or more laser beams to the array of photodiodes, with individual photodiodes positioned to (1) detect, along a closed path corresponding to the prism angle, multiple optical signals from the portion of the one or more laser beams, the multiple optical signals being sequential in a time domain, and (2) convert the multiple optical signals into electrical signals.

In another aspect of the invention, the disclosed techniques can be used to implement an autonomous system. The autonomous system also includes a controller in communication with the sensor. The controller is configured to receive the multiple electrical signals from the sensor, construct, based on the multiple electrical signals, a model of the one or more objects, and transmit a signal for changing a position of the autonomous system based on the model of the one or more objects.

In some embodiments, the controller is configured to classify the multiple electrical signals into a plurality of groups, with an individual group corresponding to one of the one or more objects. In some embodiments, the system further comprises a motor in communication with the controller. The motor is configured to (1) receive the signal for changing the position of the autonomous system from the controller, and (2) supply a force to change the position of the autonomous system. In some embodiments, the system further comprises an autonomous vehicle carrying the sensor and the controller. The autonomous vehicle includes at least one of an autonomous aircraft, an autonomous automobile, or an autonomous robot.

In some embodiments, the electromagnetic energy emitter module comprises a holographic filter to diffract the electromagnetic energy beam in different directions. In some embodiments, the electromagnetic energy emitter module is positioned to generate multiple electromagnetic energy beams. The electromagnetic energy emitter module can include an array of diodes, an individual diode positioned to generate an electromagnetic energy beam. For example, the electromagnetic energy emitter module includes a Vertical Cavity Surface Emitting Laser (VCSEL) array or an edge-emitting diode array.

In accordance with the invention, the beam steering module comprises an optical element that includes a first surface and a second, non-parallel surface, the first surface and the second surface forming an optical element angle. The optical element is positioned to rotate at an angular speed about an axis to direct the portion of the electromagnetic energy beam to the array of semiconductor units, with individual semiconductor units positioned to detect, along a closed path corresponding to the optical element angle, multiple optical signals from the portion of the electromagnetic energy beam. In some implementations, the optical element includes a prism. In some embodiments, the optical element angle is in a range from 0° to 50°. The angular speed can be slower than or equal to 12000 rpm. In some embodiments, the beam steering module comprises a second optical element that includes a third surface and a fourth, non-parallel surface, the third surface and the fourth surface forming a second optical element angle. The second optical element is positioned to rotate at a second angular speed about the axis, and wherein the first and second optical elements together direct the portion of the electromagnetic energy beam to the array of semiconductor units.

In some embodiments, the beam steering module comprises a scanning mirror supported by multiple elastic parts. The multiple elastic parts enable the scanning mirror to oscillate about one or more axes to direct the portion of the electromagnetic energy beam to the array of semiconductor units. In some implementations, the scanning mirror has an oscillation range of 0 to 50 degrees with respect to the one or more axes.

In some embodiments, the beam steering module comprises a voltage source, and a phase control device that includes multiple units. The individual units are connected to the voltage source to exhibit different refractive properties under different voltages to direct the portion of the electromagnetic energy beam to the array of semiconductor units.

In some embodiments, the individual receiver units include photodiodes. In some implementations, the array of receiver units is coupled to a substrate via a plurality of bonding units, with individual bonding units being positioned between a corresponding receiver unit and the substrate, and being separate from adjacent bonding units. In some implementations, the array of receiver units is coupled to a substrate via a bonding layer positioned between the array of receiver units and the substrate. In some embodiments, the first field of view is larger than the second field of view.

In another aspect of the invention, the disclosed techniques can be used to implement a method for sensing one or more objects in an external environment. The method includes emitting an electromagnetic energy beam from an electromagnetic energy emitter module, operating a beam steering module to direct at least a portion of the electromagnetic energy beam that is reflected from the one or more objects in the external environment to an array of receiver units, detecting, via the array of receiver units, optical signals from the portion of the electromagnetic energy beam, wherein individual receiver units of the array of receiver units are positioned to detect multiple optical signals that are sequential in a time domain, and converting, via the array of receiver units, the optical signals into electrical signals.

In accordance with the invention, operating the beam steering module comprises rotating an optical element at an angular speed about an axis to direct the portion of the electromagnetic energy beam to the array of receiver units, the optical element including two surfaces forming an optical element angle. In some embodiments, rotating the optical element includes rotating the optical element at an angular speed that is slower than or equal to 12000 rpm. In some embodiments, operating the beam steering module further comprises rotating a second optical element at a second angular speed about the axis to direct the portion of the electromagnetic energy beam to the array of receiver units, the second optical element including two surfaces forming a second optical element angle.

In some embodiments, operating the beam steering module comprises oscillating a scanning mirror about one or more axes to direct the portion of the electromagnetic energy beam to the array of semiconductor units.

In some embodiments, operating the beam steering module comprises applying different voltages to different units of a phase control device such that the units exhibit different refractive properties to direct the portion of the electromagnetic energy beam to the array of semiconductor units.

In some embodiments, the method includes constructing, based on the electrical signals, a model of the one or more objects in the external environment. Constructing the model can include classifying the electrical signals into a plurality of groups, with an individual group corresponding to one of the one or more objects in the external environment.

The above and other aspects and their implementations are described in greater detail in the drawings, the description and the claims.

### BRIEF DESCRIPTION OF THE DRAWINGS

FIG. 1 is a schematic illustration of a representative system having a sensor device in accordance with one or more embodiments of the invention.
FIG. 2 illustrates some representative apparatus having a sensor device in accordance with one or more embodiments of the invention.
FIG. 3 shows a schematic diagram of a representative LIDAR sensor system with a double-prism configuration.
FIG. 4A shows a schematic diagram of a representative sensor system configured in accordance with one or more embodiments of the invention.
FIG. 4B shows another schematic diagram of the sensor system configured in accordance with one or more embodiments of the invention.
FIG. 5A shows a schematic top view of a representative array of receiver units.
FIG. 5B shows a schematic side view of the representative array of receiver units corresponding to FIG. 5A.
FIG. 6A shows a schematic diagram of another representative array of receiver units.
FIG. 6B shows a schematic side view of the representative array of receiver units corresponding to FIG. 6A.
FIG. 7 shows a schematic diagram of representative light signals received by a 5x5 receiving array without the use of a rotating optical element.
FIG. 8 shows a schematic diagram of light signals received by a receiver unit with the use of a rotating optical element.
FIG. 9A shows a schematic diagram of light signals received by a 5x5 array of receiver units.
FIG. 9B shows a schematic diagram of light signals received by a 5x5 array of receiver units with a larger optical element angle.
FIG. 10A shows a representative configuration of the beam steering module configured in accordance with one or more embodiments of the invention.
FIG. 10B shows a schematic diagram of light signals received by a 2x3 array of receiver units.
FIG. 11A shows a representative scanning mirror configured in accordance with an example not forming part of the invention.
FIG. 11B shows a schematic diagram of light signals received by a 3x3 array of receiver units from a scanning mirror.
FIG. 11C shows another schematic diagram of light signals received by a 3x3 array of receiver units from a scanning mirror.
FIG. 12 shows a representative phase control device configured in accordance with one or more embodiments of the invention.
FIG. 13 is a flowchart representation of a method for sensing one or more objects in an external environment.
FIG. 14 is a block diagram illustrating a representative example of the architecture for a computer system or other control device that can be utilized to implement various aspects of the invention.
FIG. 15 shows a schematic diagram of a receiver array which may be used in the sensor device in accordance with one or more embodiments of the invention.

### DETAILED DESCRIPTION

As introduced above, it is important for intelligent machinery to be able to independently detect obstacles and/or to automatically engage in evasive maneuvers. Light detection and ranging (LIDAR) is a reliable and accurate detection technology. Moreover, unlike traditional image sensors (e.g., cameras) that can only sense the surroundings in two dimensions, LIDAR can obtain three-dimensional information by detecting depth or distance to an object. However, current LIDAR systems have limitations. For example, to ensure the amount of data collected from the external environment is adequate, it is desirable to operate the light emitting module (e.g., a laser diode) at a frequency of more than 1,000 pulses per second. To accommodate such a high frequency, the complexity and cost of the corresponding optical and electrical modules can be very high. Accordingly, there remains a need for improved techniques for implementing LIDAR systems to achieve lower manufacturing cost while maintaining a suitable amount of input data.

In the following discussion, numerous specific details are set forth to provide a thorough understanding of the presently disclosed technology. In other embodiments, the techniques introduced here can be practiced without these specific details. In other instances, well-known features, such as specific fabrication techniques, are not described in detail in order to avoid unnecessarily obscuring the present disclosure. References in this description to "an embodiment," "one embodiment," or the like, mean that a particular feature, structure, material, or characteristic being described is included in at least one embodiment of the present disclosure. Thus, the appearances of such phrases in this specification do not necessarily all refer to the same embodiment. On the other hand, such references are not necessarily mutually exclusive either. Furthermore, the particular features, structures, materials, or characteristics can be combined in any suitable manner in one or more embodiments. Also, it is to be understood that the various embodiments shown in the figures are merely illustrative representations and are not necessarily drawn to scale.

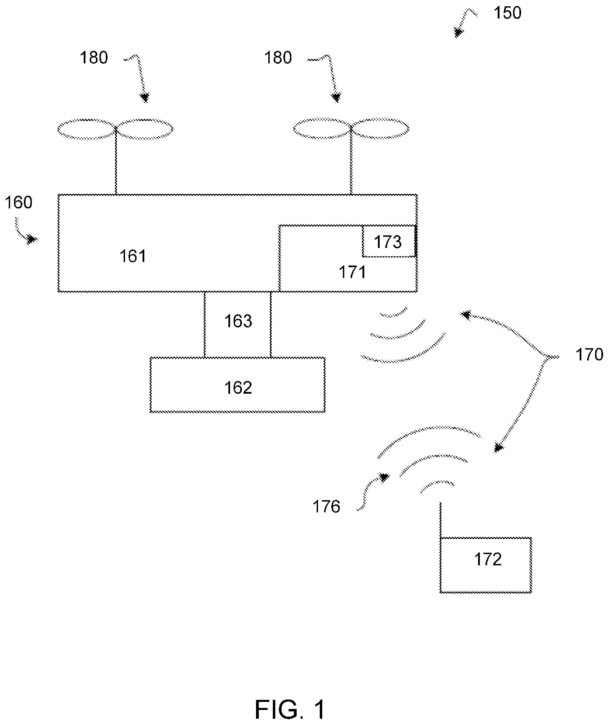

FIG. 1 is a schematic illustration of a representative system 150 having a sensor device in accordance with one or more embodiments of the invention. The system 150 includes an apparatus 160 (e.g., an unmanned aerial vehicle) and a control system 170.

The apparatus 160 can include a main body 161 (e.g., an airframe) that can carry a payload 162, for example, an imaging device or an optoelectronic scanning device (e.g., a LIDAR device). In some embodiments, the payload 162 can be a camera, a video camera and/or still camera. The camera can be sensitive to wavelengths in any of a variety of suitable bands, including visual, ultraviolet, infrared and/or other bands. The payload 162 can also include other types of sensors and/or other types of cargo (e.g., packages or other deliverables). In some embodiments, the payload 162 is supported relative to the main body 161 with a carrying mechanism 163. The carrying mechanism 163 can allow the payload 162 to be independently positioned relative to the main body 161. For instance, the carrying mechanism 163 can permit the payload 162 to rotate around one, two, three, or more axes. The carrying mechanism 163 can also permit the payload 162 to move linearly along one, two, three, or more axes. The axes for the rotational or translational movement may or may not be orthogonal to each other. In this way, when the payload 162 includes an imaging device, the imaging device can be moved relative to the main body 161 to photograph, video or track a target.

In some embodiments, the apparatus160 may include one or more propulsion units 180. The one or more propulsion units 180 can enable the apparatus 160 to move, e.g., to take off, land, hover, and move in the air with respect to up to three degrees of freedom of translation and up to three degrees of freedom of rotation. In some embodiments, the propulsion units 180 can include one or more rotors. The rotors can include one or more rotor blades coupled to a shaft. The rotor blades and shaft can be rotated by a suitable drive mechanism, such as a motor. Although the propulsion units 180 of the apparatus 160 are depicted as propeller-based and can have four rotors, any suitable number, type, and/or arrangement of propulsion units can be used. For example, the number of rotors can be one, two, three, four, five, or more. The rotors can be oriented vertically, horizontally, or at any other suitable angle with respect to the apparatus 160. The angle of the rotors can be fixed or variable. The propulsion units 180 can be driven by any suitable motor, such as a DC motor (e.g., brushed or brushless) or an AC motor. In some embodiments, the motor can be configured to mount and drive a rotor blade.

The apparatus 160 is configured to receive control commands from the control system 170. In the embodiment shown in FIG. 1, the control system 170 includes some components carried on the apparatus 160 and some components positioned off the apparatus 160. For example, the control system 170 can include a first controller 171 carried by the apparatus 160 and a second controller 172 (e.g., a human-operated, remote controller) positioned remotely from the apparatus 160 and connected via a communication link 176 (e.g., a wireless link such as a radio frequency (RF) based link). The first controller 171 can include a computer-readable medium 173 that executes instructions directing the actions of the apparatus 160, including, but not limited to, operation of the propulsion system 180 and the payload 162 (e.g., a camera). The second controller 172 can include one or more input/output devices, e.g., a display and control buttons. The operator manipulates the second controller 172 to control the apparatus 160 remotely, and receives feedback from the apparatus 160 via the display and/or other interfaces on the second controller 172. In other representative embodiments, the apparatus 160 can operate autonomously, in which case the second controller 172 can be eliminated, or can be used solely for operator override functions.

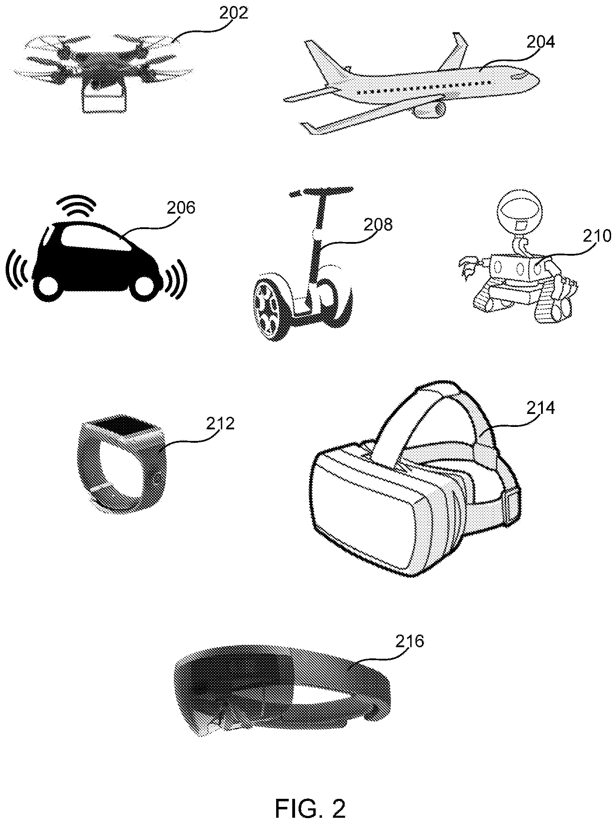

The apparatus 160 can be any suitable types of devices that can be used in various embodiments. FIG. 2 demonstrates some representative devices including at least one of an unmanned aerial vehicle (UAV) 202, a manned aircraft 204, an autonomous car 206, a self-balancing vehicle 208, a terrestrial robot 210, a smart wearable device 212, a virtual reality (VR) head-mounted display 214, and an augmented reality (AR) head-mounted display 216.

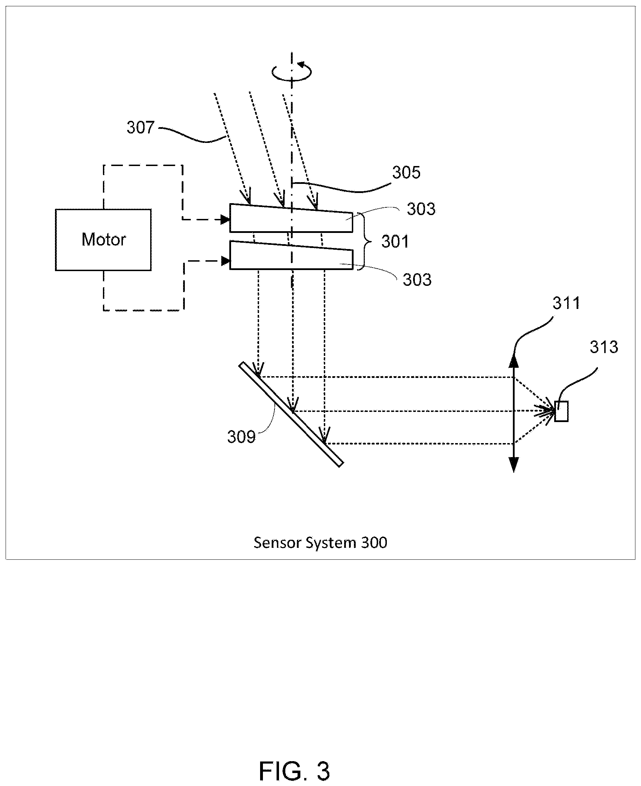

FIG. 3 illustrates some general aspects in which a current LIDAR system operates. The LIDAR sensor system 300 shown in FIG. 3 includes a double-prism beam steering device 301. The two prisms 303 can rotate about a common axis 305 in order to steer the light in different directions. The return beam 307 is steered by the beam steering device 301 and reflected by a beam splitting device 309 toward a receiving lens 311, which can collect and focus the returned beam on a detector 313.

In the configuration shown in FIG. 3, in order to provide suitable coverage of the environment via the sensor system 300, and appropriate density of the point cloud data for the corresponding objects, it is desirable to rotate the two prisms in the beam steering device 301 at a high speed (e.g., over 5000 revolutions per second). However, a high rotational speed may lead to high power consumption for the sensor system - cooling the sensor system may also become a concern.

Alternatively, instead of using a beam steering device 301 to direct light in different directions, the detector can include a solid-state type of configuration using a large number of receiving elements (e.g., an array of receiving elements) to increase the density of the electrical signals received by the controller. However, a large array of receiving elements (e.g., over 100×100 elements) also raise concerns regarding area and power consumption in circuitry design.

The invention includes a different sensor system that combines certain advantages of the rotating prism and the array of receiving elements. Using the disclosed techniques, the complexity of calibrating two rotating prisms can be eliminated, thereby reducing the manufacturing complexity of the sensor system. With the use of a small array of receiving elements, the rotational speed of the prism can also be greatly reduced, reducing power consumption of the sensor system.

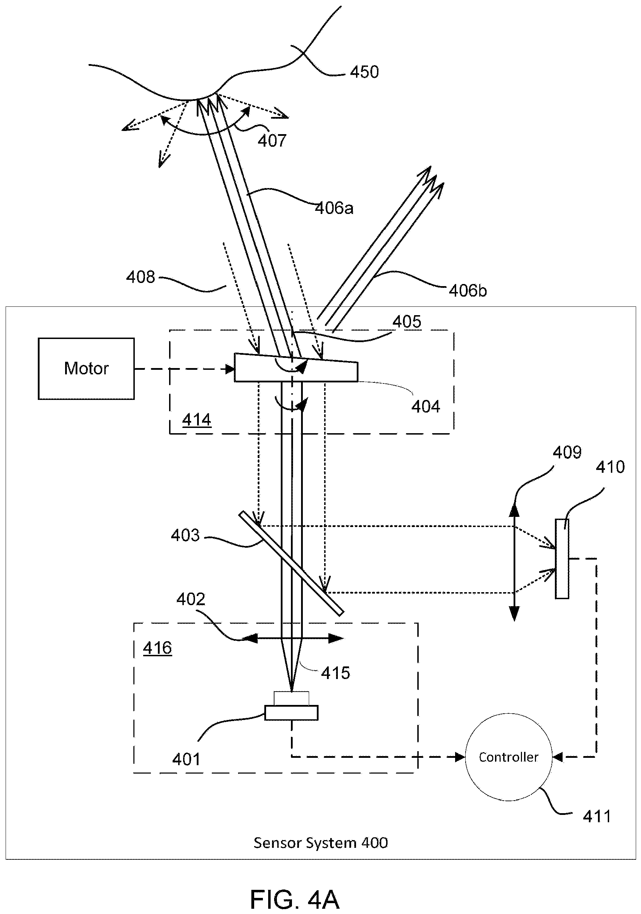

FIG. 4A shows a schematic diagram of a representative sensor system 400 configured in accordance with one or more embodiments of the invention. The sensor system 400 can detect the distance of an object 450 in the external environment based on measuring the time for light to travel between the sensor system 400 and the object 450, i.e., the time-of-flight (TOF). The sensor system 400 includes an emitter module 416. The emitter module 416 includes an emitter 401 (e.g., a laser diode) that can generate an electromagnetic energy beam 415, such as a laser beam, within a first field of view (FOV) of the emitter 401. The electromagnetic energy beam 415 can be a single electromagnetic energy pulse or a series of electromagnetic energy pulses. In the discussion below, a light emitter is used as an example. It is however noted that any suitable types of electromagnetic energy emitters can be adopted in the sensor system 400.

The emitter module 416 may include a collimator 402 (e.g., a lens) that can be used for collimating the light beam 415 generated by the light emitter 401. In some embodiments, the collimated light can be directed toward a beam splitting device 403. The beam splitting device 403 can allow the collimated light from the emitter module 416 to pass through. Alternatively, the beam splitting device 403 may not be necessary when different schemes are employed (e.g., when a light emitter is positioned in front of the detector).

In accordance with the invention, the sensor system 400 also includes a beam steering module 414 that includes an optical element 404. The optical element 404 can rotate about an axis 405 in order to steer the light in different directions, such as a first direction 406a and a second direction 406b. When the outgoing beam in the first direction 406a hits the object 450, the reflected or scattered light may spread over a large angle 407 and only a fraction of the energy may be reflected back toward the sensor system 400. The return beam 408 can be reflected by the beam splitting device 403 toward a receiving lens 409, which can collect and focus the returned beam on a detector 410 that includes an array of receiving elements. The detector 410 operates with a second FOV, which can be the same as or smaller than the first FOV of the emitter 401.

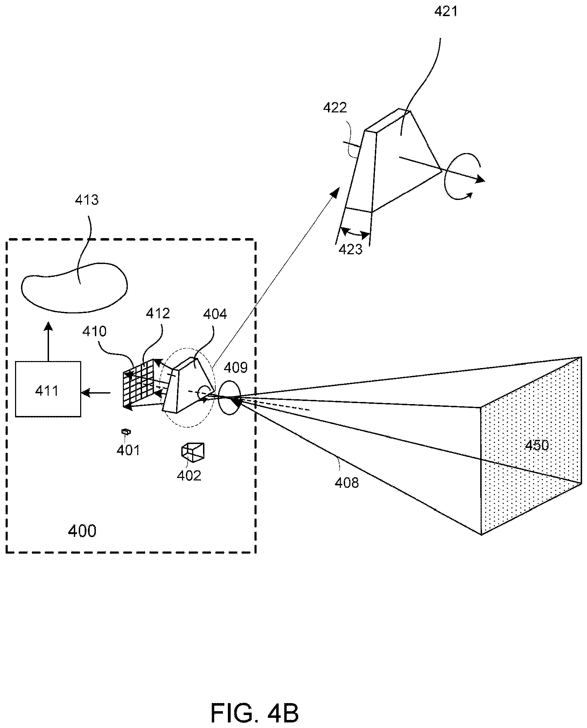

FIG. 4B shows another schematic diagram of the LIDAR sensor system 400 in accordance with the invention. When the outgoing beam hits the object 450, the return beam 408 can be reflected toward a receiving lens 409, which can collect and focus the returned beam on an optical element 404 (e.g., a prism). In this example, the optical element 404 includes a first surface 421 and a second surface 422. The first and second surfaces 421, 422 are non-parallel, forming an optical element angle 423. The optical element angle 423 allows the optical element 404 to steer the returned beam in different directions toward the detector 410. The detector 410 includes a small array of receiver units 412. The optical element angle 423 can be in a range from 0° to 50°, and can have other suitable values in other embodiments. In some implementations, the optical element angle 423 is in a range from 5° to 15°. The detector 410 receives the returned light beam and converts the light beam into electrical signals. In some implementations, to allow more receiver units 412 to receive light, it is desirable for the emitter 401 to have a larger first FOV than the second FOV of the detector 410.

The detector 410 receives the returned light and converts the light into electrical signals. As shown in both FIGS. 4A-4B, a controller 411 can be coupled to the detector 410 (which includes the array of receiver units 412) for measuring the TOF to detect the distance to the object 450. For example, the controller 411 can create a corresponding point cloud data set for the object 450 based on the electrical signals from the detector 410. Thus, the sensor system 400 can measure the distance to the object 450 based on the time difference between generating the pulse by the emitter 401 and receiving the return beam 408 by the detector 410.

In some implementations, the emitter module 416 includes a holographic filter. The holographic filter can diffract an incoming light beam into different directions. For example, a holographic bandpass filter that has a shape of a cube can be placed between the emitter 401 and the collimator 402 to diffract the light beam from the emitter 401 at angles between 0° to 90°.

In some embodiments, the light emitter 401 can generate multiple light beams. For example, the emitter 401 can include an array of diodes, each generating a light beam that can be received by a corresponding receiver unit. For example, the emitter 401 can include a Vertical Cavity Surface Emitting Laser (VCSEL) array or an edge-emitting diode array. As another example, multiple edge-emitting laser diodes can be packaged together to form a packaged emitter.

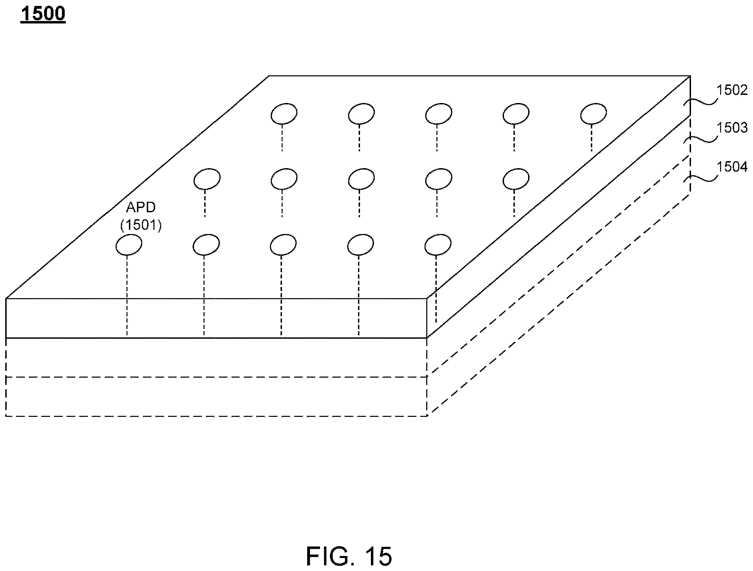

In some embodiments, each receiver unit 412 of the array comprises a photodiode to convert light signals into electrical signals. FIG. 15 shows a schematic diagram of a receiver array 1500 in accordance with one or more embodiments of the present technology. As shown in FIG. 15, the array 1500 includes a plurality of Avalanche Photodiode (APD) units (1501). The array can include a detection layer 1502 coupled to the plurality of APD units for signal detection and collection. Optionally, the array can include an analog layer 1503 coupled to the detection layer 1502 to perform signal amplification. In some implementations, the array includes a logical layer 1504 to perform signal processing, such as time-to-digital conversion, analog-to-digital conversion, and various algorithms including denoising. In some embodiments, the array can be implemented as a Photodiode (PD) array or a PIN (Positive-Intrinsic-Negative) PD array.

In some implementations, a small array can be used to reduce manufacturing cost. For example, a 10×10 array can be used to receive the light beam and convert optical signals to electrical signals. In some implementations, a large array can be used to obtain higher density of the data. For example, an array of 8K resolution (i.e., 7680×4320 pixels) can be used in some configurations.

When the light emitter 401 includes an array of diodes, the individual diodes are positioned to obtain an optical correspondence with the receiver units 412 in the detector 410. The beam steering module 414 can also be used to simultaneously vary the angles of the light beams from the diodes and the angles of light beams to the receivers to obtain the correspondence between the diodes and receiver units.

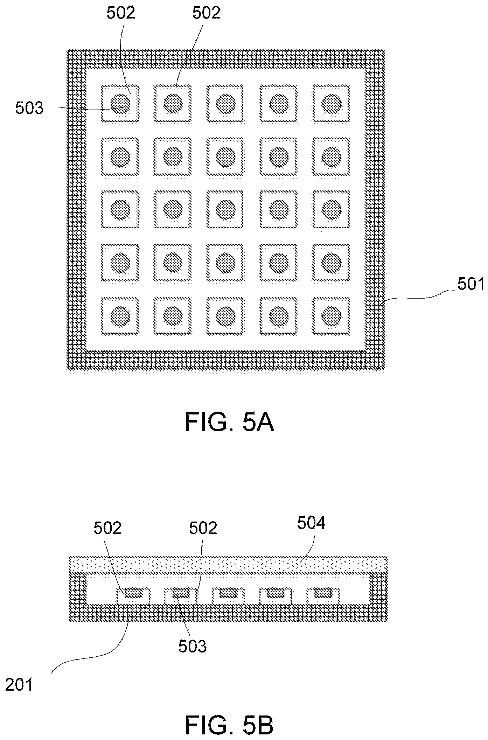

FIG. 5A shows a schematic top view of a representative array of receiver units 500. In this particular embodiment, each separate unit 503 is disposed on or in a separate die 502. The individual dies are coupled to the substrate 501 separately using methods such as die bonding techniques. FIG. 5B shows a schematic side view of the representative array of receiver units 500. A protecting plate 504, such as a glass plate, can be coupled to the substrate 501 to allow the light to pass through while protecting the units from external hazards.

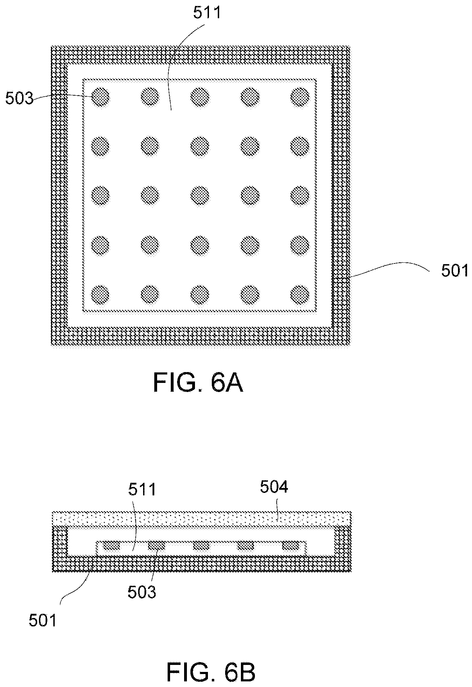

FIG. 6A shows a schematic diagram of another representative array of receiver units 600. In this particular embodiment, the receiver units are disposed in a uniform die 511 that functions as a bonding layer. The die 511 is then coupled to the substrate 501 using methods such as die bonding techniques. FIG. 6B shows a schematic side view of the representative array of receiver units 600. Similarly, a protecting plate 504, such as a glass plate, can be coupled to the substrate 501 to allow the light to pass through while protecting the units from external hazards.

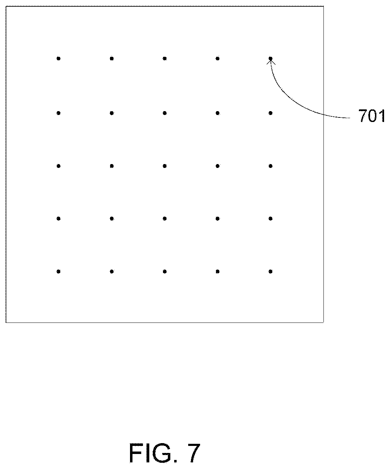

Without the rotating optical element shown in FIGS. 4A-4B, each receiver unit on the array may detect only one light signal. FIG. 7 shows a schematic diagram of representative light signals received by a 5x5 receiving array without the use of an optical element. In this example, each of the semiconductor element of the array receives a single light signal 701 over a period T (e.g., 1ms).

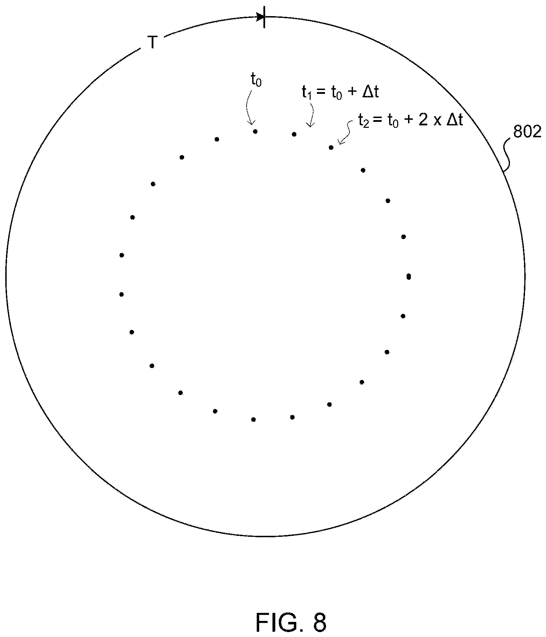

When the optical element is rotated, however, each receiver unit can receive multiple light signals. The light emitter usually has a high operating frequency, while the frequency at which the receiver units operate may be relatively low. Accordingly, when the optical element rotates, individual semiconductor elements can leverage the high operating frequency of the light emitter and receive multiple light signals that are sequential in the time domain. FIG. 8 shows a schematic diagram of light signals received by a receiver unit of an array when the optical element rotates. In this example, the optical element can complete a full rotation in the period T, and the frequency of the light beam pulses is f = ¹/*_{Δt}*. Therefore, the receiver unit can receive multiple light signals, e.g., one at each of times t0, t1=t0+Δt, t2=t0+2×Δt, etc. along a closed path within a period T, forming a closed path 802. For example, the operating frequency of the light emitter can be 1 MHz (Δt = 1µs). The optical element can rotate at a speed of 1000 revolutions per second (rev/s). The rotation of the optical element allows the receiver units to capture all the light signals within the period T=1 millisecond at different locations (1000 signals per millisecond). In some implementations, the optical element can rotate at a lower angular speed, e.g., 200 rev/s (equal to 12000 rpm) or lower. For example, the optical element rotates at 200 rev/s and takes T=5 milliseconds to complete a full rotation. The optical element can thus capture all the light signals within the 5 milliseconds at different locations. The use of time-domain data thus can compensate for the spatial sparsity of the point cloud data and increase the density of data for the controller to more accurately model the external environment. Using the time-domain data also allows the optical element to rotate at a much lower angular speed, thereby consuming less power and providing more stability.

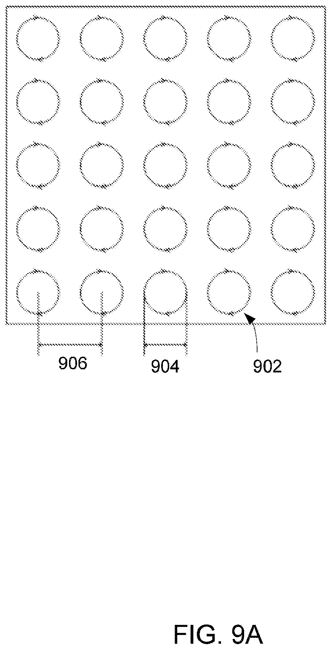

FIG. 9A shows a schematic diagram of light signals received by a 5x5 array of receiver units. Each unit receives multiple signals that are sequential in the time domain, forming a closed path 902. In this embodiment, the closed path 902 is a circle. In particular, the diameter of the circle 904 can be determined based on the optical element angle. For example, a larger optical element angle can result in a larger diameter of the circles. The distance 906 between the centers of two closed paths is determined based on the placement of adjacent receiver units of array.

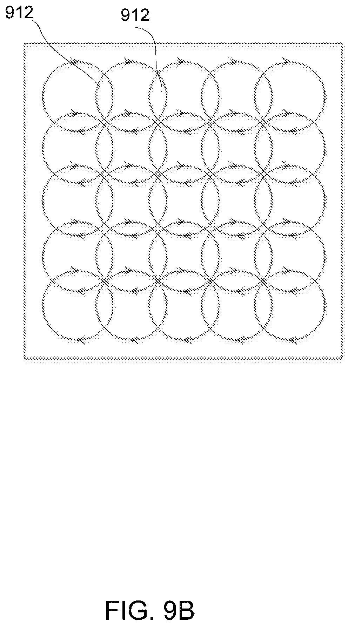

In the example shown in FIG. 9A, the optical element angle is small so that there is no overlap between adjacent circles. However, this may create some areas that are not covered by any of the light beams (also known as "blind areas"). Thus, in some implementations, it is desirable to have overlapping areas between adjacent closed paths so that blind areas are reduced (e.g., minimized). FIG. 9B shows a schematic diagram of light signals received by a 5x5 array of receiver units with a larger optical element angle. In this embodiment, the optical element angle is larger, resulting in overlapping areas 912 between the adjacent circles. It is noted, however, because the signals are received sequentially in the time domain, two signals do not appear at the same location at the same time along the paths.

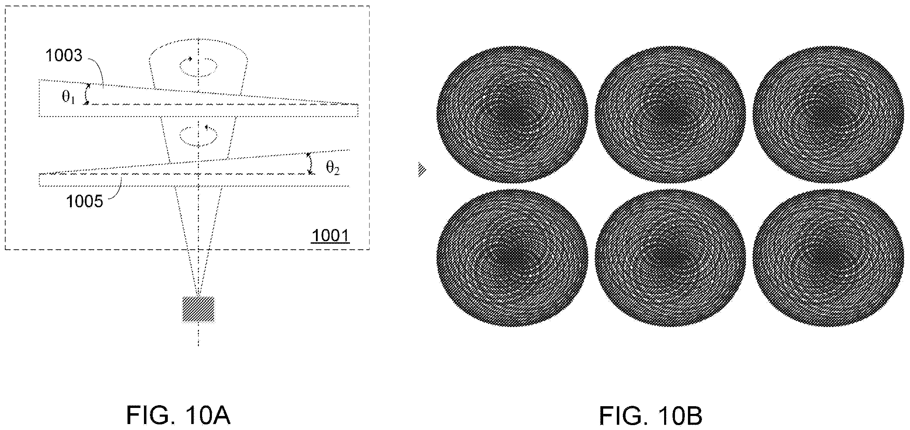

In some embodiments, the beam steering module shown in FIG. 4A includes a second optical element to allow the receiver units to obtain a denser collection of data. FIG. 10A shows a representative configuration of the beam steering module 1001. The beam steering module 1001 includes a first optical element 1003 having a first optical angle θ₁ and a second optical element 1005 having a second optical angle θ₂. Both optical element 1003, 1005 rotate about a common axis. FIG. 10B shows a schematic diagram of light signals received by a 2x3 array of receiver units. Using two optical elements can greatly increase the density of the signals.

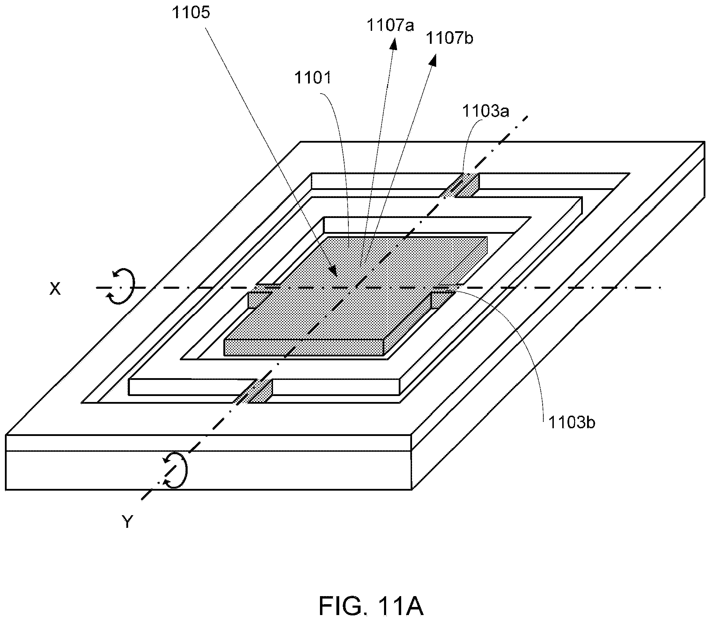

In examples not forming part of the invention, the beam steering module can also use alternative optical configurations to steer the returned beams in different directions so that each receiver unit receives multiple light signals within a time period. In some examples, the beam steering module can include a scanning mirror, such as a Micro Electro Mechanical System (MEMS) scanning mirror, to generate multiple light signals in different directions. FIG. 11A shows a representative scanning mirror configured in accordance with one or more examples not forming part of the invention. The mirror 1101 is supported by elastic parts 1103a, 1103b so that the mirror 1101 can oscillate around both the X axis and Y axis. In some embodiments, the mirror 1101 oscillates within a range of [0°, 20°] with respect to the two axes. In some implementations, the mirror 1101 oscillates within a much wider range, e.g., within a range of [0°, 50°] with respect to the two axes, to provide a wider range of light beams. By adjusting the frequency of oscillations around one or both axes, the mirror 1101 can reflect the incoming beam 1105 into different directions 1107a, 1107b. The receiver units then can receive multiple signals that are sequential in the time domain.

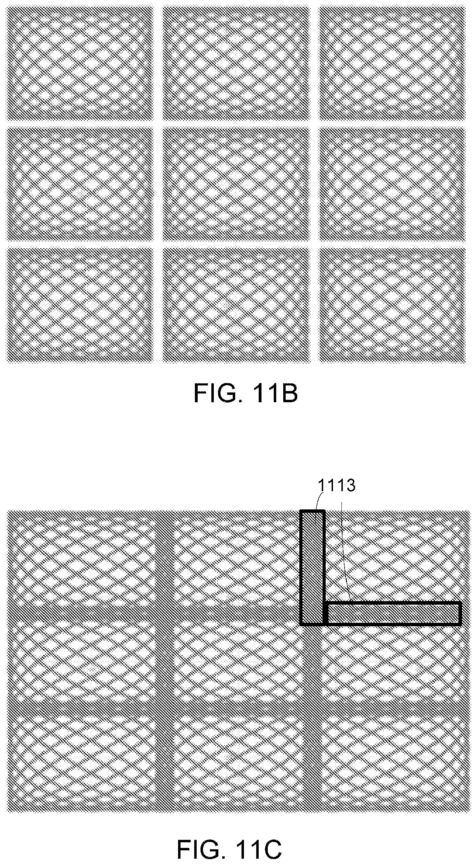

FIG. 11B shows a schematic diagram of light signals received by a 3x3 array of receiver units from a scanning mirror. In this example, the scanning mirror has a small oscillation range, resulting a small angular range of reflected beams. The FOV angle of the receiver units, however, is larger than the angular range of the reflected beams. Therefore, there are no overlapping areas for the received signals.

FIG. 11C shows another schematic diagram of light signals received by a 3x3 array of receiver units from a scanning mirror. In this example, the scanning mirror has a large oscillation range, resulting a large angular range of reflected beams. The FOV angle of the receiver units is thus smaller than the angular range of the reflected beams. Therefore, adjacent receiver units can detect overlapping areas 1113 in the received signals.

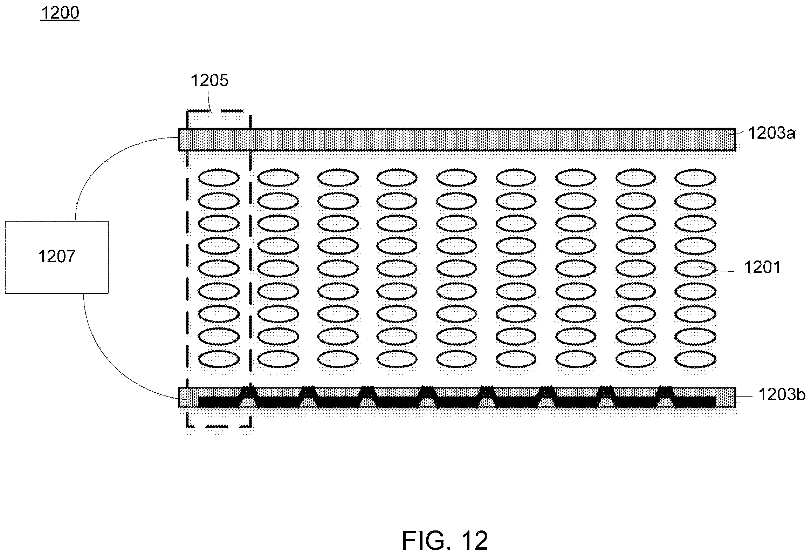

In some embodiments, the beam steering module can include a phase control device to generate multiple light signals in different directions. FIG. 12 shows a representative phase control device 1200 configured in accordance with one or more embodiments of the present technology. The device includes a liquid crystal layer 1201 placed between two transparent electrodes 1203a, 1203b. The device is divided into individual units 1205 to allow independent control of each unit. When the individual units are connected to a voltage source 1207, the liquid crystal molecules rotate, thereby changing the refractive indices of individual units. By applying different voltages to different units, different refractive indices allow the light to be refracted in different directions. Other phase control devices, such as optical waveguide phase control devices, can also be used to generate multiple light beams in different direction to allow the receiver units to obtain a denser collection of data.

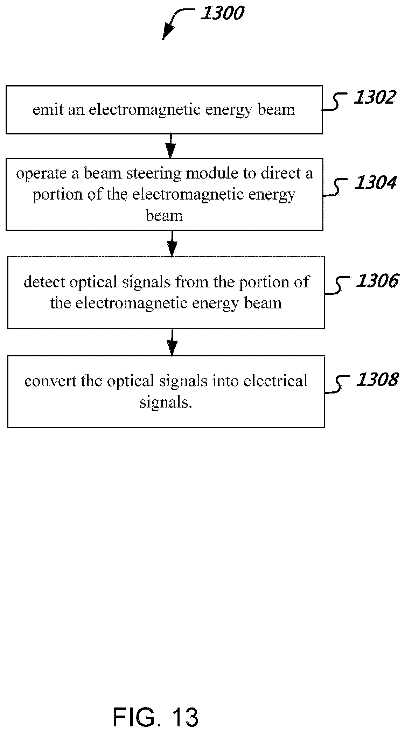

FIG. 13 is a flowchart representation of a method for sensing one or more objects in an external environment. The method 1300 includes, at block 1302, emitting an electromagnetic energy beam from an electromagnetic energy emitter. The method 1300 includes, at block 1304, operating a beam steering module to direct at least a portion of the electromagnetic energy beam that is reflected from the one or more objects in the external environment to an array of receiver units. The method includes, at block 1306, detecting, via the array of receiver units, optical signals from the portion of the electromagnetic energy beam, wherein individual receiver units of the array of receiver units are positioned to detect multiple optical signals that are sequential in a time domain. The method also includes, at block 1308, converting, via the array of receiver units, the optical signals into electrical signals.

In accordance with the invention, operating the beam steering module includes rotating an optical element at an angular speed about an axis to direct the portion of the electromagnetic energy beam to the array of receiver units, the optical element including two surfaces forming an optical element angle. In some implementations, rotating the optical element includes rotating the optical element at an angular speed between 500 to 1000 rev/s. In some embodiments, operating the beam steering module further comprises rotating a second optical element at a second angular speed about the axis to direct the portion of the electromagnetic energy beam to the array of receiver units, the second optical element including two surfaces forming a second optical element angle.

In some embodiments, operating the beam steering module includes oscillating a scanning mirror about one or more axes to direct the portion of the electromagnetic energy beam to the array of semiconductor units. In some embodiments, operating the beam steering module includes applying different voltages to different units of a phase control device such that the units exhibit different refractive properties to direct the portion of the electromagnetic energy beam to the array of semiconductor units.

In some embodiments, representative methods include constructing, based on the electrical signals, a model of the one or more objects in the external environment. In some implementations, constructing the model comprises classifying the electrical signals into a plurality of groups, with an individual group corresponding to one of the one or more objects in the external environment.

In one advantageous aspect, the disclosed techniques can reduce the complexity of manufacturing the sensor system. Because a single optical element can be used, as compared to multiple ones in other configurations, the calibration of the sensor system can be simplified. The array of receiver units has a small size, thereby reducing area cost and power consumption as compared to other solid-state configurations in the detector.

In another advantageous aspect, the combination of the single optical element with the small array of receiver units allows the sensor system to provide a sufficient coverage of the environment and an appropriate density of the point cloud data for modeling the environment. Due to the use of the array, the rotational speed of the optical element can be reduced to 500 to 1000 rev/s as compared to over 5000 rev/s in other configurations. A lower rotational speed can greatly reduce power consumption of the sensor system and also lead to a longer service life of the product.

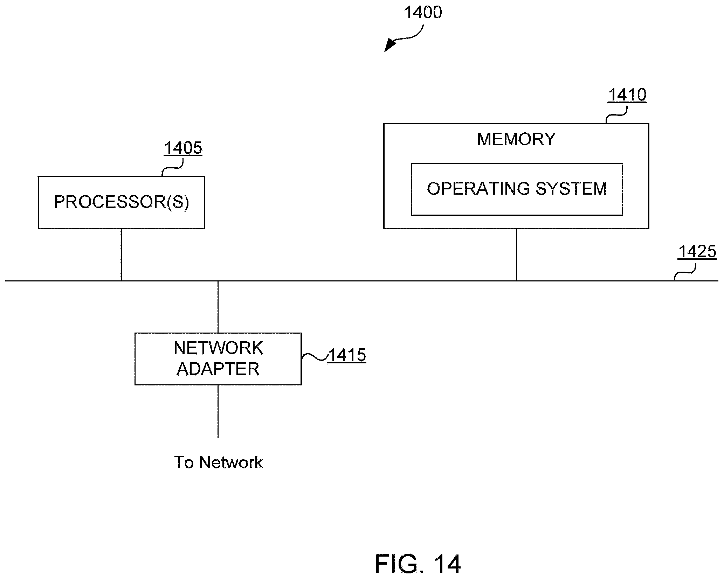

FIG. 14 is a block diagram illustrating an example of the architecture for a computer system or other control device 1400 that can be utilized to implement various aspects of the invention. In FIG. 14, the computer system 1400 includes one or more processors 1405 and memories 1410 connected via an interconnect 1425. The interconnect 1425 may represent any one or more separate physical buses, point to point connections, or both, connected by appropriate bridges, adapters, or controllers. The interconnect 1425, therefore, may include, for example, a system bus, a Peripheral Component Interconnect (PCI) bus, a HyperTransport or industry standard architecture (ISA) bus, a small computer system interface (SCSI) bus, a universal serial bus (USB), IIC (I2C) bus, or an Institute of Electrical and Electronics Engineers (IEEE) standard 674 bus, sometimes referred to as "Firewire."

The processor(s) 1405 may include central processing units (CPUs) to control the overall operation of, for example, the host computer. In certain embodiments, the processor(s) 1405 accomplish this by executing software or firmware stored in memory 1410. The processor(s) 1405 may be, or may include, one or more programmable general-purpose or special-purpose microprocessors, digital signal processors (DSPs), programmable controllers, application specific integrated circuits (ASICs), programmable logic devices (PLDs), or the like, or a combination of such devices.

The memory 1410 can be or include the main memory of the computer system. The memory 1410 represents any suitable form of random access memory (RAM), read-only memory (ROM), flash memory, or the like, or a combination of such devices. In use, the memory 1410 may contain, among other things, a set of machine instructions which, when executed by the processor 1405, causes the processor 1405 to perform operations to implement embodiments of the presently disclosed technology.

Also connected to the processor(s) 1405 through the interconnect 1425 is an (optional) network adapter 1415. The network adapter 1415 provides the computer system 1400 with the ability to communicate with remote devices, such as the storage clients, and/or other storage servers, and may be, for example, an Ethernet adapter or Fiber Channel adapter.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the described embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While the present description contains many specifics, these should not be construed as limitations on the scope the invention, which is defined by the claims.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this document should not be understood as requiring such separation in all embodiments.

Only a number of embodiments and examples are described and other implementations, enhancements and variations can be made based on what is described within the scope of the inventioni as defined by the claims.

From the foregoing, it will be appreciated that specific embodiments of the invention have been described herein for purposes of illustration, but that various modifications may be made without deviating from the scope of the invention as defined by the claims. For example, while a light emitter is used as an example in the foregoing discussion, any suitable type of electromagnetic emitter can be used for various sensor systems. Certain aspects of the invention described in the context of particular embodiments may be combined or eliminated in other embodiments. Further, while advantages associated with certain embodiments of the invention have been described in the context of those embodiments, other embodiments may also exhibit such advantages, and not all embodiments need necessarily exhibit such advantages to fall within the scope of the invention as defined by the claims. Accordingly, the scope of the invention as defined by the claims can encompass other embodiments not expressly shown or described herein.

## Claims

1. A sensor device, comprising:
an electromagnetic energy emitter module positioned to emit an electromagnetic energy beam (415) directed to one or more objects within a first field of view;
a beam steering module (414, 1001) positioned to receive at least a portion of the electromagnetic energy beam (415) that is reflected from the one or more objects within a second field of view; and
an array (1500) of semiconductor receiver units (180, 412, 500, 600, 1501) positioned to convert the portion of the electromagnetic energy beam (415) into multiple electrical signals (701),
wherein the beam steering module (414, 1001) is further positioned to direct the portion of the electromagnetic energy beam (415) to the array (1500) of semiconductor receiver units (180, 412, 500, 600, 1501), with individual semiconductor receiver units (180, 412, 500, 600, 1501) positioned to (1) detect multiple optical signals (701) from the portion of the electromagnetic energy beam (415), the multiple optical signals (701) being sequential in a time domain, and (2) convert the multiple optical signals (701) into electrical signals (701),
wherein the sensor device is **characterized in that**
the beam steering module (414, 1001) comprises:
an optical element (404, 1003, 1005) that includes a first surface (421) and a second, non-parallel surface, the first surface (421) and the second surface (422) forming an optical element angle (423),
wherein the optical element (404, 1003, 1005) is positioned to rotate at an angular speed about an axis (305, 405) to direct the portion of the electromagnetic energy beam (415) to the array (1500) of semiconductor receiver units (180, 412, 500, 600, 1501), with individual semiconductor receiver units (180, 412, 500, 600, 1501) positioned to detect, along a closed path (802, 902) corresponding to the optical element angle (423), multiple optical signals (701) from the portion of the electromagnetic energy beam (415).

2. The sensor device of claim 1, wherein the electromagnetic energy emitter module comprises a holographic filter to diffract the electromagnetic energy beam (415) in different directions.

3. The sensor device of claim 1, wherein the electromagnetic energy emitter module is positioned to generate multiple electromagnetic energy beams (415),
wherein preferably the electromagnetic energy emitter module comprises an array (1500) of diodes, with individual diodes positioned to generate the multiple electromagnetic energy beams (415),
and
wherein further preferably the electromagnetic energy emitter module includes a Vertical Cavity Surface Emitting Laser (VCSEL) array (1500) or an edge-emitting diode array (1500).

4. The sensor device of claim 1, wherein the optical element (404, 1003, 1005) includes a prism (303),
or
wherein the optical element angle (423) is in a range from 0° to 50°,
or
wherein the angular speed is slower than or equal to 12000 rpm,
or
wherein the beam steering module (414, 1001) comprises:
a second optical element (1005) that includes a third surface and a fourth, non-parallel surface, the third surface and the fourth surface forming a second optical element (1005) angle (423),
wherein the second optical element (1005) is positioned to rotate at a second angular speed about the axis (305, 405), and wherein the first and second optical elements (1005) together direct the portion of the electromagnetic energy beam (415) to the array (1500) of semiconductor receiver units (180, 412, 500, 600, 1501).

5. The sensor device of claim 1, wherein the beam steering module (414, 1001) comprises:
a scanning mirror supported by multiple elastic parts, wherein the multiple elastic parts enable the scanning mirror to oscillate about one or more axes to direct the portion of the electromagnetic energy beam (415) to the array (1500) of semiconductor receiver units (180, 412, 500, 600, 1501).

6. The sensor device of claim 1, wherein the beam steering module (414, 1001) comprises:
a voltage source (1207), and
a phase control device (1200) that includes multiple units (180, 412, 500, 600, 1501), wherein the individual units (1205) are connected to the voltage source (1207) to exhibit different refractive properties under different voltages to direct the portion of the electromagnetic energy beam (415) to the array (1500) of semiconductor receiver units (180, 412, 500, 600, 1501).

7. The sensor device of claim 1, wherein the array (1500) of semiconductor receiver units (180, 412, 500, 600, 1501) is coupled to a substrate (501) via a plurality of bonding units (180, 412, 500, 600, 1501), with individual bonding units (180, 412, 500, 600, 1501) being positioned between a corresponding semiconductor receiver unit and the substrate (501), and being separate from adjacent bonding units (180, 412, 500, 600, 1501),
or
wherein the array (1500) of semiconductor receiver units (180, 412, 500, 600, 1501) is coupled to a substrate (501) via a bonding layer positioned between the array (1500) of semiconductor receiver units (180, 412, 500, 600, 1501) and the substrate (501).

8. The sensor device according to anyone of claims 1 - 7,
wherein the electromagnetic energy emitter module includes
one or more laser diodes positioned to emit one or more laser beams, and
a collimator (402) positioned to collimate the one or more laser beams toward one or more objects within the first field of view;
wherein the optical element includes a prism (303) that includes two non-parallel surfaces forming a prism angle, the prism (303) positioned to receive at least a portion of the one or more laser beams that is reflected back from the one or more objects within a second field of view; and
wherein the array of semiconductor receiver units (180, 412, 500, 600, 1501) includes an array (1500) of photodiodes configured to convert the portion of the one or more laser beams into multiple electrical signals (701),
wherein the prism (303) is further positioned to rotate at the angular speed to direct the portion of the one or more laser beams to the array (1500) of photodiodes, with individual photodiodes positioned to (1) detect, along a closed path (802, 902) corresponding to the prism (303) angle, multiple optical signals (701) from the portion of the one or more laser beams, the multiple optical signals (701) being sequential in a time domain, and (2) convert the multiple optical signals (701) into electrical signals (701).

9. An autonomous system, comprising:
a sensor according to one of the claims 1 to 7, and
a controller (171, 172, 411) in communication with the sensor, the controller (171, 172, 411) configured to:
receive the multiple electrical signals (701) from the sensor;
construct, based on the multiple electrical signals (701), a model of the one or more objects; and
transmit a signal (701) for changing a position of the autonomous system based on the model of the one or more objects.

10. The autonomous system of claim 9, further comprising a motor in communication with the controller (171, 172, 411), the motor configured to (1) receive the signal (701) for changing the position of the autonomous system from the controller (171, 172, 411), and (2) supply a force to change the position of the autonomous system,
or
further comprising an autonomous vehicle carrying the sensor and the controller (171, 172, 411), and wherein the autonomous vehicle includes at least one of an autonomous aircraft, an autonomous automobile, or an autonomous robot.

11. A method (1300) for sensing one or more objects in an external environment, comprising:
emitting an electromagnetic energy beam (415) from an electromagnetic energy emitter module;
operating a beam steering module (414, 1001) to direct at least a portion of the electromagnetic energy beam (415) that is reflected from the one or more objects in the external environment to an array (1500) of semiconductor receiver units (180, 412, 500, 600, 1501);
detecting, via the array (1500) of semiconductor receiver units (180, 412, 500, 600, 1501), optical signals (701) from the portion of the electromagnetic energy beam (415), wherein individual semiconductor receiver units (180, 412, 500, 600, 1501) of the array (1500) of semiconductor receiver units (180, 412, 500, 600, 1501) are positioned to detect multiple optical signals (701) that are sequential in a time domain; and
converting, via the array (1500) of semiconductor receiver units (180, 412, 500, 600, 1501), the optical signals (701) into electrical signals (701);
wherein the method (1300) is **characterized**
**in that** the beam steering module (414, 1001) comprises: an optical element (404, 1003, 1005) that includes a first surface (421) and a second, non-parallel surface, the first surface (421) and the second surface (422) forming an optical element angle (423),
by positioning the optical element (404, 1003, 1005) to rotate at an angular speed about an axis (305, 405) to direct the portion of the electromagnetic energy beam (415) to the array (1500) of semiconductor receiver units (180, 412, 500, 600, 1501), and
by positioning individual semiconductor receiver units (180, 412, 500, 600, 1501) to detect, along a closed path (802, 902) corresponding to the optical element angle (423), multiple optical signals (701) from the portion of the electromagnetic energy beam (415).

12. The method (1300) of claim 11, wherein rotating the optical element (404, 1003, 1005) includes rotating the optical element (404, 1003, 1005) at an angular speed that is slower than or equal to 12000 rpm,
or
wherein operating the beam steering module (414, 1001) further comprises:
rotating a second optical element (1005) at a second angular speed about the axis (305, 405) to direct the portion of the electromagnetic energy beam (415) to the array (1500) of semiconductor receiver units (180, 412, 500, 600, 1501), the second optical element (1005) including two surfaces forming a second optical element (1005) angle (423).

13. The method (1300) of claim 11, wherein operating the beam steering module (414, 1001) comprises:
oscillating a scanning mirror about one or more axes to direct the portion of the electromagnetic energy beam (415) to the array (1500) of semiconductor receiver units (180, 412, 500, 600, 1501),
or
wherein operating the beam steering module (414, 1001) comprises:
applying different voltages to different units (180, 412, 500, 600, 1501) of a phase control device (1200) such that the units (180, 412, 500, 600, 1501) exhibit different refractive properties to direct the portion of the electromagnetic energy beam (415) to the array (1500) of semiconductor receiver units (180, 412, 500, 600, 1501),
or
wherein the method (1300) comprises:
constructing, based on the electrical signals (701), a model of the one or more objects in the external environment,
wherein further preferably constructing the model comprises classifying the electrical signals (701) into a plurality of groups, with an individual group corresponding to one of the one or more objects in the external environment.

## Patentansprüche

1. Sensorvorrichtung, die Folgendes umfasst:
ein elektromagnetisches Energieemittermodul, das positioniert ist, um einen elektromagnetischen Energiestrahl (415) zu emittieren, der auf ein oder mehrere Objekte in einem ersten Sichtfeld gerichtet ist;
ein Strahllenkungsmodul (414, 1001), das positioniert ist, um mindestens einen Abschnitt des elektromagnetischen Energiestrahls (415), der von dem einen oder den mehreren Objekten in einem zweiten Sichtfeld reflektiert wird, zu empfangen; und
ein Array (1500) von Halbleiterempfängereinheiten (180, 412, 500, 600, 1501), die positioniert sind, um den Abschnitt des elektromagnetischen Energiestrahls (415) in mehrere elektrische Signale (701) umzuwandeln,
wobei das Strahllenkungsmodul (414, 1001) ferner positioniert ist, um den Abschnitt des elektromagnetischen Energiestrahls (415) auf das Array (1500) von Halbleiterempfängereinheiten (180, 412, 500, 600, 1501) zu richten, wobei einzelne Halbleiterempfängereinheiten (180, 412, 500, 600, 1501) positioniert sind, um (1) mehrere optische Signale (701) im Abschnitt des elektromagnetischen Energiestrahls (415) zu detektieren, wobei die mehreren optischen Signale (701) in einer Zeitdomäne sequenziell sind, und (2) die mehreren optischen Signale (701) in elektrische Signale (701) umzuwandeln,
wobei die Sensorvorrichtung **dadurch gekennzeichnet ist, dass** das Strahllenkungsmodul (414, 1001) Folgendes umfasst:
ein optisches Element (404, 1003, 1005), das eine erste Fläche (421) und eine zweite, nicht parallele Fläche beinhaltet, wobei die erste Fläche (421) und die zweite Fläche (422) einen optischen Elementwinkel (423) bilden,
wobei das optische Element (404, 1003, 1005) positioniert ist, um sich mit einer Winkelgeschwindigkeit um eine Achse (305, 405) zu drehen, um den Abschnitt des elektromagnetischen Energiestrahls (415) auf das Array (1500) von Halbleiterempfängereinheiten (180, 412, 500, 600, 1501) zu richten, wobei einzelne Halbleiterempfängereinheiten (180, 412, 500, 600, 1501) positioniert sind, um entlang eines geschlossenen Pfades (802, 902), der dem optischen Elementwinkel (423) entspricht, mehrere optische Signale (701) im Abschnitt des elektromagnetischen Energiestrahls (415) zu detektieren.

2. Sensorvorrichtung nach Anspruch 1, wobei das elektromagnetische Energieemittermodul ein holographisches Filter umfasst, um den elektromagnetischen Energiestrahl (415) in verschiedene Richtungen abzulenken.

3. Sensorvorrichtung nach Anspruch 1, wobei das elektromagnetische Energieemittermodul positioniert ist, um mehrere elektromagnetische Energiestrahlen (415) zu erzeugen, wobei das elektromagnetische Energieemittermodul vorzugsweise ein Array (1500) von Dioden umfasst, wobei einzelne Dioden positioniert sind, um die mehreren elektromagnetischen Energiestrahlen (415) zu erzeugen,
und
wobei das elektromagnetische Energieemittermodul vorzugsweise ferner ein flächenemitierendes Laser(VCSEL)-Array (1500) mit einem vertikalen Resonator oder ein kantenemittierendes Diodenarray (1500) beinhaltet.

4. Sensorvorrichtung nach Anspruch 1, wobei das optische Element (404, 1003, 1005) ein Prisma (303) beinhaltet,
oder
wobei der optische Elementwinkel (423) in einem Bereich von 0° bis 50° liegt,
oder
wobei die Winkelgeschwindigkeit niedriger als oder gleich 12000 U/min ist,
oder
wobei das Strahllenkungsmodul (414, 1001) Folgendes umfasst:
ein zweites optisches Element (1005), das eine dritte Fläche und eine vierte, nicht parallele Fläche beinhaltet, wobei die dritte Fläche und die vierte Fläche einen zweiten optischen Element(1005)-Winkel (423) bilden,
wobei das zweite optische Element (1005) positioniert ist, um sich mit einer zweiten Winkelgeschwindigkeit um die Achse (305, 405) zu drehen, und wobei das erste und das zweite optische Element (1005) den Abschnitt des elektromagnetischen Energiestrahls (415) zusammen auf das Array (1500) von Halbleiterempfängereinheiten (180, 412, 500, 600, 1501) richten.

5. Sensorvorrichtung nach Anspruch 1, wobei das Strahllenkungsmodul (414, 1001) Folgendes umfasst:
einen Scanspiegel, der von mehreren elastischen Teilen gestützt wird, wobei die mehreren elastischen Teile es dem Scanspiegel ermöglichen, um eine oder mehrere Achsen zu oszillieren, um den Abschnitt des elektromagnetischen Energiestrahls (415) auf das Array (1500) von Halbleiterempfängereinheiten (180, 412, 500, 600, 1501) zu richten.

6. Sensorvorrichtung nach Anspruch 1, wobei das Strahllenkungsmodul (414, 1001) Folgendes umfasst:
eine Spannungsquelle (1207) und
eine Phasensteuervorrichtung (1200), die mehrere Einheiten (180, 412, 500, 600, 1501) beinhaltet, wobei die einzelnen Einheiten (1205) mit der Spannungsquelle (1207) verbunden sind, um unter verschiedenen Spannungen verschiedene Brechungseigenschaften zu zeigen, um den Abschnitt des elektromagnetischen Energiestrahls (415) auf das Array (1500) von Halbleiterempfängereinheiten (180, 412, 500, 600, 1501) zu richten.

7. Sensorvorrichtung nach Anspruch 1, wobei das Array (1500) von Halbleiterempfängereinheiten (180, 412, 500, 600, 1501) via eine Vielzahl von Bondingeinheiten (180, 412, 500, 600, 1501) an ein Substrat (501) gekoppelt ist, wobei einzelne Bondingeinheiten (180, 412, 500, 600, 1501) zwischen einer entsprechenden Halbleiterempfängereinheit und dem Substrat (501) positioniert und von benachbarten Bondingeinheiten (180, 412, 500, 600, 1501) getrennt sind,
oder
wobei das Array (1500) von Halbleiterempfängereinheiten (180, 412, 500, 600, 1501) via eine Bondingschicht, die zwischen dem Array (1500) von Halbleiterempfängereinheiten (180, 412, 500, 600, 1501) und einem Substrat (501) positioniert ist, an das Substrat (501) gekoppelt ist.

8. Sensorvorrichtung nach einem der Ansprüche 1-7,
wobei das elektromagnetische Energieemittermodul Folgendes beinhaltet
eine oder mehrere Laserdioden, die positioniert sind, um einen oder mehrere Laserstrahlen zu emittieren, und
einen Kollimator (402), der positioniert ist, um den einen oder die mehreren Laserstrahlen zu einem oder mehreren Objekten im ersten Sichtfeld zu kollimieren;
wobei das optische Element ein Prisma (303) beinhaltet, das zwei nicht parallele Flächen beinhaltet, die einen Prismenwinkel bilden, wobei das Prisma (303) positioniert ist, um mindestens einen Abschnitt des einen oder der mehreren Laserstrahlen zu empfangen, der von dem einen oder den mehreren Objekten in einem zweiten Sichtfeld reflektiert wird; und
wobei das Array von Halbleiterempfängereinheiten (180, 412, 500, 600, 1501) ein Array (1500) von Fotodioden beinhaltet, die dazu ausgelegt sind, den Abschnitt des einen oder der mehreren Laserstrahlen in mehrere elektrische Signale (701) umzuwandeln,
wobei das Prisma (303) ferner positioniert ist, sich mit der Winkelgeschwindigkeit zu drehen, um den Abschnitt des einen oder der mehreren Laserstrahlen auf das Array (1500) von Fotodioden zu richten, wobei einzelne Fotodioden positioniert sind, um (1) entlang eines geschlossenen Pfades (802, 902), der dem Prismen(303)-Winkel entspricht, mehrere optische Signale (701) im Abschnitt des einen oder der mehreren Laserstrahlen zu detektieren, wobei die mehreren optischen Signale (701) in einer Zeitdomäne sequenziell sind, und (2) die mehreren optischen Signale (701) in elektrische Signale (701) umzuwandeln.

9. Autonomes System, das Folgendes umfasst:
einen Sensor nach einem der Ansprüche 1 bis 7 und
eine Steuerung (171, 172, 411) in Kommunikation mit dem Sensor,
wobei die Steuerung (171, 172, 411) zu Folgendem ausgelegt ist:
Empfangen der mehreren elektrischen Signale (701) vom Sensor; Konstruieren eines Modells des einen oder der mehreren Objekte auf Basis der mehreren elektrischen Signale (701) und
Übertragen eines Signals (701) zum Ändern einer Position des autonomen Systems auf Basis des Modells des einen oder der mehreren Objekte.

10. Autonomes System nach Anspruch 9, das ferner einen Motor in Kommunikation mit der Steuerung (171, 172, 411) umfasst, wobei der Motor dazu ausgelegt ist, (1) das Signal (701) zum Ändern der Position des autonomen Systems von der Steuerung (171, 172, 411) zu empfangen und (2) eine Kraft zu liefern, um die Position des autonomen Systems zu ändern,
oder
das ferner ein autonomes Fahrzeug umfasst, in dem sich der Sensor und die Steuerung (171, 172, 411) befinden, und wobei das autonome Fahrzeug mindestens eines von einem autonomen Luftfahrzeug, einem autonomen Kraftfahrzeug oder einem autonomen Roboter beinhaltet.

11. Verfahren (1300) zum Erfassen von einem oder mehreren Objekten in einer externen Umgebung, das Folgendes umfasst:
Emittieren eines elektromagnetischen Energiestrahls (415) von einem elektromagnetischen Energieemittermodul;
Betreiben eines Strahllenkungsmoduls (414, 1001), um mindestens einen Abschnitt des elektromagnetischen Energiestrahls (415), der von dem einen oder den mehreren Objekten in der externen Umgebung reflektiert wird, auf ein Array (1500) von Halbleiterempfängereinheiten (180, 412, 500, 600, 1501) zu richten;
Detektieren von optischen Signalen (701) via das Array (1500) von Halbleiterempfängereinheiten (180, 412, 500, 600, 1501) im Abschnitt des elektromagnetischen Energiestrahls (415), wobei einzelne Halbleiterempfängereinheiten (180, 412, 500, 600, 1501) des Arrays (1500) von Halbleiterempfängereinheiten (180, 412, 500, 600, 1501) positioniert sind, um mehrere optische Signale (701), die in einer Zeitdomäne sequenziell sind, zu detektieren; und
Umwandeln der optischen Signale (701) via das Array (1500) von Halbleiterempfängereinheiten (180, 412, 500, 600, 1501) in elektrische Signale (701);
wobei das Verfahren (1300) **gekennzeichnet ist dadurch**, dass das Strahllenkungsmodul (414, 1001) Folgendes umfasst: ein optisches Element (404, 1003, 1005), das eine erste Fläche (421) und eine zweite, nicht parallele Fläche beinhaltet, wobei die erste Fläche (421) und die zweite Fläche (422) einen optischen Elementwinkel (423) bilden,
**durch** Positionieren des optischen Elements (404, 1003, 1005), um sich mit einer Winkelgeschwindigkeit um eine Achse (305, 405) zu drehen, um den Abschnitt des elektromagnetischen Energiestrahls (415) auf das Array (1500) von Halbleiterempfängereinheiten (180, 412, 500, 600, 1501) zu richten, und
**durch** Positionieren von einzelnen Halbleiterempfängereinheiten (180, 412, 500, 600, 1501), um entlang eines geschlossenen Pfades (802, 902), der dem optischen Elementwinkel (423) entspricht, mehrere optische Signale (701) im Abschnitt des elektromagnetischen Energiestrahls (415) zu detektieren.

12. Verfahren (1300) nach Anspruch 11, wobei das Drehen des optischen Elements (404, 1003, 1005) das Drehen des optischen Elements (404, 1003, 1005) mit einer Winkelgeschwindigkeit, die niedriger als oder gleich 12000 U/min ist, beinhaltet, oder
wobei das Betreiben des Strahllenkungsmoduls (414, 1001) ferner Folgendes umfasst:
Drehen eines zweiten optischen Elements (1005) mit einer zweiten Winkelgeschwindigkeit um die Achse (305, 405), um den Abschnitt des elektromagnetischen Energiestrahls (415) auf das Array (1500) von Halbleiterempfängereinheiten (180, 412, 500, 600, 1501) zu richten, wobei das zweite optische Element (1005) zwei Flächen beinhaltet, die einen Winkel (423) des zweiten optischen Elements (1005) bilden.

13. Verfahren (1300) nach Anspruch 11, wobei das Betreiben des Strahllenkungsmoduls (414, 1001) Folgendes umfasst:
Oszillieren eines Scanspiegels um eine oder mehrere Achsen, um den Abschnitt des elektromagnetischen Energiestrahls (415) auf das Array (1500) von Halbleiterempfängereinheiten (180, 412, 500, 600, 1501)zu richten,
oder
wobei das Betreiben des Strahllenkungsmoduls (414, 1001) Folgendes umfasst:
Anlegen von verschiedenen Spannungen an verschiedene Einheiten (180, 412, 500, 600, 1501) einer Phasensteuervorrichtung (1200), derart, dass die Einheiten (180, 412, 500, 600, 1501) verschiedene Brechungseigenschaften zeigen, um den Abschnitt des elektromagnetischen Energiestrahls (415) auf das Array (1500) von Halbleiterempfängereinheiten (180, 412, 500, 600, 1501) zu richten,
oder
wobei das Verfahren (1300) Folgendes umfasst:
Konstruieren eines Modells des einen oder der mehreren Objekte in der externen Umgebung auf Basis der elektrischen Signale (701),
wobei das Konstruieren des Modells ferner vorzugsweise das Klassifizieren der elektrischen Signale (701) in eine Vielzahl von Gruppen umfasst, wobei eine einzelne Gruppe einem des einen oder der mehreren Objekte in der externen Umgebung entspricht.

## Revendications

1. Capteur, comprenant :
un module d'émetteur d'énergie électromagnétique positionné pour émettre un faisceau d'énergie électromagnétique (415) orienté vers un ou plusieurs objet(s) dans un premier champ de vision ;
un module d'orientation de faisceau (414, 1001) positionné pour recevoir au moins une partie du faisceau d'énergie électromagnétique (415) qui est réfléchie par le ou les objet(s) dans un second champ de vision ; et
un réseau (1500) d'unités de récepteurs à semi-conducteurs (180, 412, 500, 600, 1501) positionnées pour convertir la partie du faisceau d'énergie électromagnétique (415) en plusieurs signaux électriques (701),
dans lequel le module d'orientation de faisceau (414, 1001) est en outre positionné afin d'orienter la partie du faisceau d'énergie électromagnétique (415) vers le réseau (1500) d'unités de récepteurs à semi-conducteurs (180, 412, 500, 600, 1501), avec des unités de récepteurs à semi-conducteurs individuelles (180, 412, 500, 600, 1501) positionnées pour (1) détecter plusieurs signaux optiques (701) à partir de la partie du faisceau d'énergie électromagnétique (415), les signaux optiques (701) étant séquentiels dans un domaine temporel, et (2) convertir les signaux optiques (701) en signaux électriques (701),
dans lequel le capteur est **caractérisé en ce que**
le module d'orientation de faisceau (414, 1001) comprend :
un élément optique (404, 1003, 1005) qui comprend une première surface (421) et une seconde surface non parallèle, la première surface (421) et la seconde surface (422) formant un angle d'élément optique (423),
dans lequel l'élément optique (404, 1003, 1005) est positionné afin de tourner à une vitesse angulaire autour d'un axe (305, 405) de façon à orienter la partie du faisceau d'énergie électromagnétique (415) vers le réseau (1500) d'unités de récepteurs à semi-conducteurs (180, 412, 500, 600, 1501), avec des unités de récepteurs à semi-conducteurs individuelles (180, 412, 500, 600, 1501) positionnées pour détecter, le long d'un trajet fermé (802, 902) correspondant à l'angle d'élément optique (423), plusieurs signaux optiques (701) à partir de la partie du faisceau d'énergie électromagnétique (415).

2. Capteur selon la revendication 1, dans lequel le module d'émetteur d'énergie électromagnétique comprend un filtre holographique destiné à diffracter le faisceau d'énergie électromagnétique (415) dans des directions différentes.

3. Capteur selon la revendication 1, dans lequel le module d'émetteur d'énergie électromagnétique est positionné pour générer plusieurs faisceaux d'énergie électromagnétique (415),
dans lequel, de préférence, le module d'émetteur d'énergie électromagnétique comprend un réseau (1500) de diodes, avec des diodes individuelles positionnées afin de générer les multiples faisceaux d'énergie électromagnétique (415),
et
dans lequel, en outre, de préférence, le module d'émetteur d'énergie électromagnétique comprend un réseau de laser à émission de surface à cavité verticale (VCSEL) (1500) ou un réseau de diodes à émission par les bords (1500).

4. Capteur selon la revendication 1, dans lequel l'élément optique (404, 1003, 1005) comprend un prisme (303),
ou
dans lequel l'élément optique (423) présente une portée comprise entre 0° et 50°,
ou
dans lequel la vitesse angulaire est inférieure ou égale à 12000 tr/min,
ou
dans lequel le module d'orientation de faisceau (414, 1001) comprend :
un second élément optique (1005) qui comprend une troisième surface et une quatrième surface non parallèle, la troisième surface et la quatrième surface formant un second angle (423) d'élément optique (1005),
dans lequel le second élément optique (1005) est positionné pour tourner à une seconde vitesse angulaire autour de l'axe (305, 405), et dans lequel le premier et le second éléments optiques (1005) orientent ensemble la partie du faisceau d'énergie électromagnétique (415) vers le réseau (1500) d'unités de récepteurs à semi-conducteurs (180, 412, 500, 600, 1501).

5. Capteur selon la revendication 1, dans lequel le module d'orientation de faisceau (414, 1001) comprend :
un miroir de balayage supporté par plusieurs parties élastiques, dans lequel les parties élastiques permettent au miroir de balayage d'osciller autour d'un ou plusieurs axe(s) afin d'orienter la partie du faisceau d'énergie électromagnétique (415) vers le réseau (1500) d'unités de récepteurs à semi-conducteurs (180, 412, 500, 600, 1501).

6. Capteur selon la revendication 1, dans lequel le module d'orientation de faisceau (414, 1001) comprend :
une source de tension (1207), et
un dispositif de commande de phase (1200) qui comprend plusieurs unités (180, 412, 500, 600, 1501), dans lequel les unités individuelles (1205) sont reliées à la source de tension (1207) afin de présenter des propriétés réfractives différentes sous différentes tensions de façon à orienter la partie du faisceau d'énergie électromagnétique (415) vers le réseau (1500) d'unités de récepteurs à semi-conducteurs (180, 412, 500, 600, 1501).

7. Capteur selon la revendication 1, dans lequel le réseau (1500) d'unités de récepteurs à semi-conducteurs (180, 412, 500, 600, 1501) est relié à un substrat (501) via une pluralité d'unités de liaison (180, 412, 500, 600, 1501), avec les unités de liaison individuelles (180, 412, 500, 600, 1501) étant positionnées entre une unité de récepteur à semi-conducteur correspondante et le substrat (501), et étant distinctes des unités de liaison adjacentes (180, 412, 500, 600, 1501),
ou
dans lequel le réseau (1500) d'unités de récepteurs à semi-conducteurs (180, 412, 500, 600, 1501) est couplé à un substrat (501) via une couche de liaison positionnée entre le réseau (1500) d'unités de récepteurs à semi-conducteurs (180, 412, 500, 600, 1501) et le substrat (501).

8. Capteur selon l'une quelconque des revendications 1 à 7,
dans lequel le module d'émetteur d'énergie électromagnétique comprend
une ou plusieurs diode(s) laser positionnée(s) pour émettre un ou plusieurs faisceau(x) laser, et
un collimateur (402) positionné pour collimater le ou les faisceau(x) laser vers un ou plusieurs objet(s) dans le premier champ de vision ;
dans lequel l'élément optique comprend un prisme (303) qui comprend deux surfaces non parallèles qui forment un angle de prisme, le prisme (303) étant positionné pour recevoir au moins une partie du ou des faisceau(x) laser qui est réfléchie par le ou les objet(s) dans un second champ de vision ; et
dans lequel le réseau d'unités de récepteurs à semi-conducteurs (180, 412, 500, 600, 1501) comprend un réseau (1500) de photodiodes configurées pour convertir la partie du ou des faisceau(x) laser en plusieurs signaux électriques (701),
dans lequel le prisme (303) est en outre positionné pour tourner a la vitesse angulaire afin d'orienter la partie du ou des faisceau(x) laser vers le réseau (1500) de photodiodes, avec les photodiodes individuelles positionnées pour (1) détecter, le long d'un trajet fermé (802, 902) correspondant à l'angle de prisme (303), plusieurs signaux optiques (701) à partir de la partie du ou des faisceau(x) laser, les signaux optiques (701) étant séquentiels dans un domaine temporel, et (2) convertir les signaux optiques (701) en signaux électriques (701).

9. Système autonome, comprenant :
un capteur selon l'une des revendications 1 à 7, et
un contrôleur (171, 172, 411) en communication avec le capteur, le contrôleur (171, 172, 411) étant configuré pour :
recevoir les signaux électriques (701) de la part du capteur ;
construire, sur la base des signaux électriques (701), un modèle du ou des objet(s) ; et
transmettre un signal (701) destiné à changer une position du système autonome sur la base du modèle du ou des objet(s).

10. Système autonome selon la revendication 9, comprenant en outre un moteur en communication avec le contrôleur (171, 172, 411), le moteur étant configuré pour (1) recevoir le signal (701) destiné à changer la position du système autonome de la part du contrôleur (171, 172, 411), et (2) fournir une force destinée à changer la position du système autonome,
ou
comprenant en outre un véhicule autonome qui porte le capteur et le contrôleur (171, 172, 411), et dans lequel le véhicule autonome comprend au moins l'un d'un aéronef autonome, d'une automobile autonome, ou d'un robot autonome.

11. Procédé (1300) de détection d'un ou plusieurs objet(s) dans un environnement externe, comprenant :
l'émission d'un faisceau d'énergie électromagnétique (415) par un module d'émetteur d'énergie électromagnétique ;
le fonctionnement d'un module d'orientation de faisceau (414, 1001) afin d'orienter au moins une partie du faisceau d'énergie électromagnétique (415) qui est réfléchie par le ou les objet(s) dans l'environnement externe vers un réseau (1500) d'unités de récepteurs à semi-conducteurs (180, 412, 500, 600, 1501) ;
la détection, via le réseau (1500) d'unités de récepteurs à semi-conducteurs (180, 412, 500, 600, 1501), de signaux optiques (701) à partir de la partie du faisceau d'énergie électromagnétique (415), dans lequel les unités de récepteurs à semi-conducteurs individuelles (180, 412, 500, 600, 1501) du réseau (1500) d'unités de récepteurs à semi-conducteurs (180, 412, 500, 600, 1501) sont positionnées afin de détecter plusieurs signaux optiques (701) qui sont séquentiels dans un domaine temporel ; et
la conversion, via le réseau (1500) d'unités de récepteurs à semi-conducteurs (180, 412, 500, 600, 1501), des signaux optiques (701) en signaux électriques (701) ;
dans lequel le procédé (1300) est **caractérisé**
**en ce que** le module d'orientation de faisceau (414, 1001) comprend : un élément optique (404, 1003, 1005) qui comprend une première surface (421) et une seconde surface non parallèle, la première surface (421) et la seconde surface (422) formant un angle d'élément optique (423),
en positionnant lequel l'élément optique (404, 1003, 1005) afin qu'il tourne à une vitesse angulaire autour d'un axe (305, 405) de façon à orienter la partie du faisceau d'énergie électromagnétique (415) vers le réseau (1500) d'unités de récepteurs à semi-conducteurs (180, 412, 500, 600, 1501), et
en positionnant les unités de récepteurs à semi-conducteurs individuelles (180, 412, 500, 600, 1501) pour détecter, le long d'un trajet fermé (802, 902) correspondant à l'angle d'élément optique (423), plusieurs signaux optiques (701) à partir de la partie du faisceau d'énergie électromagnétique (415).

12. Procédé (1300) selon la revendication 11, dans lequel la rotation de l'élément optique (404, 1003, 1005) comprend la rotation de l'élément optique (404, 1003, 1005) à une vitesse angulaire qui est inférieure ou égale à 12000 tr/min,
ou
dans lequel le fonctionnement du module d'orientation de faisceau (414, 1001) comprend en outre :
la rotation d'un second élément optique (1005) à une seconde vitesse angulaire autour de l'axe (305, 405) afin d'orienter la partie du faisceau d'énergie électromagnétique (415) vers le réseau (1500) d'unités de récepteurs à semi-conducteurs (180, 412, 500, 600, 1501), le second élément optique (1005) comprenant deux surfaces qui forment un second angle (423) d'élément optique (1005).

13. Procédé (1300) selon la revendication 11, dans lequel le fonctionnement du module d'orientation de faisceau (414, 1001) comprend :
l'oscillation d'un miroir de balayage autour d'un ou plusieurs axe(s) afin d'orienter la partie du faisceau d'énergie électromagnétique (415) vers le réseau (1500) d'unités de récepteurs à semi-conducteurs (180, 412, 500, 600, 1501),
ou
dans lequel le fonctionnement du module d'orientation de faisceau (414, 1001) comprend :
l'application de différentes tensions à différentes unités (180, 412, 500, 600, 1501) d'un dispositif de commande de phase (1200) de sorte que les unités (180, 412, 500, 600, 1501) présentent des propriétés réfractives différentes de façon à orienter la partie du faisceau d'énergie électromagnétique (415) vers le réseau (1500) d'unités de récepteurs à semi-conducteurs (180, 412, 500, 600, 1501),
ou
dans lequel le procédé (1300) comprend :
la construction, sur la base des signaux électriques (701), d'un modèle du ou des objet(s) dans l'environnement externe,
dans lequel, en outre, de préférence, la construction du modèle comprend la classification des signaux électriques (701) en une pluralité de groupes, avec un groupe individuel qui correspond au ou aux objet(s) dans l'environnement externe.
